(19) Europäisches Patentamt
European Patent Office
Office européen des brevets

(11) **EP 1 178 094 B1**

(12) **FASCICULE DE BREVET EUROPEEN**

(45) Date de publication et mention
de la délivrance du brevet:
**02.04.2003 Bulletin 2003/14**

(51) Int Cl.⁷: **C09J 5/02**, C08J 7/02

(21) Numéro de dépôt: **01401971.5**

(22) Date de dépôt: **23.07.2001**

(54) **Composition pour la préparation à froid au collage de matériaux composites**

Haftvermittlerzusammensetzung zum Kaltverkleben von Verbundwerkstoffen

Primer composition for preparing composites by adhering them without heating

(84) Etats contractants désignés:
**AT BE CH CY DE DK ES FI FR GB GR IE IT LI LU MC NL PT SE TR**

(30) Priorité: **01.08.2000 FR 0010110**
**02.05.2001 FR 0105863**

(43) Date de publication de la demande:
**06.02.2002 Bulletin 2002/06**

(73) Titulaire: **Bostik Findley S.A.**
**92800 Puteaux (FR)**

(72) Inventeurs:
• **Fouquay, Stéphane**
**76130 Mont Saint Aignan (FR)**
• **Lallier, Jean-Pierre**
**95220 Herblay (FR)**
• **Miskovic, Michel**
**60200 Compiegne (FR)**

(74) Mandataire: **Ohresser, François et al**
**Atofina,**
**Département Propriété Industrielle,**
**Cours Michelet,**
**La Défense 10**
**92091 Paris La Défense Cedex (FR)**

(56) Documents cités:
**DE-A- 19 924 139** **US-A- 4 397 707**
**US-A- 5 792 303**

**Description**

La présente invention concerne une composition liquide utilisable pour la préparation à froid de matériaux composites en vue de leur conférer sans ponçage ou abrasion préalable un état de surface propice à un collage à l'aide d'adhésifs de type Polyuréthanne.

Les matériaux composites comprennent principalement deux constituants une résine de type polyester insaturé et au moins une charge de renforcement constituée de fibres de verre.

Ces matériaux composites se présentent le plus souvent soit sous forme de composites masses soit sous forme de composites stratifiés.

Les matériaux composites masses comprennent principalement trois constituants: une résine polyester insaturée UP pour environ 30 % poids et deux types de charges (environ 70 %), une charge de renforcement constituée de fibres généralement de verre (environ 20 %) et une charge de remplissage inerte (environ 50 %) destinée à réduire le coût du matériau souvent constituée de carbonate de calcium. Naturellement, on peut y ajouter d'autres additifs, par exemple des additifs thermoplastiques comme l'acétate de polyvinyle (PVAc), d'une part pour limiter le retrait de la résine lors de la polymérisation et, d'autre part, pour conduire à des surfaces lisses ; on peut également ajouter des agents de démoulage internes ; par exemple des stéarates de zinc ou de calcium sont également additionnés afin de faciliter le démoulage des pièces.

Ces composites sont des produits moulés soit à froid et/ou sous vide, on parle alors de Polyester contact, soit à chaud et ils sont alors désignés par une série de sigles d'origine américaine tels que SMC (Sheet Molding Compound), BMC (Bulk Molding Compound), RTM (Resin Transfert Molding), AMC (Adapted Molding Compound), RIM (Resin Injection Molding), etc ...

L'industrie automobile est représentative des utilisateurs de ce type de matériaux composites. Cette industrie utilise en effet de plus en plus fréquemment ces matériaux pour remplacer les tôles de carrosserie afin de réduire le poids, de résoudre les problèmes de corrosion, mais également pour acquérir plus de liberté dans l'élaboration de formes nouvelles. La jonction par collage est alors le seul moyen d'assemblage disponible, les techniques classiques telles que le sertissage et le boulonnage n'étant plus adaptées. Par ailleurs, la finition de la surface après mise en peinture doit présenter un aspect lisse identique à celui de la tôle, les deux matériaux étant présents sur le véhicule.

Les matériaux composites stratifiés de type PRV (Plastiques Renforcés Verre) ou FRP (Fiber Reinforced Polymers) désignent tout matériau ou pièce composite comprenant une matrice de résine de type polyester insaturé et un renfort en fibres, notamment en fibres de verre. Dans la fabrication de la pièce en PRV, la réalisation du stratifié est engagée à la suite de la pose et lors de phase de durcissement du revêtement dit gel coat. L'opération consiste à réaliser sur le gel coat une série de couches successives de résines et de renfort pour obtenir après "ébullage" un ensemble compact et durci qui donne à la pièce ses propriétés de structure.

Le renfort peut être sous la forme de mat de verre, de fils de verre coupés ou de tissus de verre, le choix du bon renfort permettant de donner les propriétés de structure optimales à l'objet moulé. Des fibres à base de polymères synthétiques (sous forme de roving, de mat ou de nappes non tissées), de matières inorganiques ou de composés tels que le bore, de carbone (graphite) ou de silice ( sous forme de roving ou mat) sont également utilisées. Parmi les renforts en fibre de verre les plus couramment utilisés et connus de l'homme de l'art, on distingue :

- le mat ou voile de verre,
- le mat à fils coupés,
- le Roving ou Stratifil,
- le tissu Roving,
- la toile ou tissu,
- les matériaux sandwich.

Pour une résine de stratification, le choix du renfort se fait en fonction des caractéristiques mécaniques recherchées, lesquelles dépendent notamment du nombre de couches, de l'épaisseur du stratifié et de son taux de verre.

La résine peut être appliquée manuellement, à la brosse, par projection ou par injection, le choix de la technique variant en fonction de la forme, de la taille et du nombre de pièces à réaliser.

Les résines polyesters sont largement utilisées et donnent d'excellents résultats dans le cadre de moulage au contact. Pour certaines applications nécessitant des performances mécaniques spécifiques, on utilise aussi des résines vinyl-ester, des résines époxydiques. Quel que soit le type de résine utilisé, cette transformation à froid constitue pour la résine moulée un passage irréversible d'un état liquide vers un état solide pendant lequel, par une réaction chimique, le matériau acquiert ses caractéristiques finales. Cette transformation est donc une étape importante qui conditionne bien entendu le comportement et les propriétés de la pièce moulée, mais également son état de surface.

L'industrie du bateau de plaisance est représentative des utilisateurs de cette technique de moulage au contact ou " contact molding ". Ce procédé de stratification en moule ouvert réalisé manuellement ou par projection simultanée du verre et de la résine est également appelé stratification à basse pression. Cette industrie utilise fréquemment les stratifiés sur base résine polyesters insaturés pour réaliser la coque des bateaux, laquelle doit ensuite accueillir, avant la pause du pont, un certain nombre de cloisons pouvant être positionnées différemment selon le modèle désiré. La jonction par collage est alors le seul moyen d'assemblage disponible, les techniques classiques telles que le sertissage et le boulonnage n'étant pas adaptées.

On utilise généralement un adhésif polyuréthanne qui est de type mono-composant (PU1K ou HMPUR) ou bi-composant (PU2K).

Le problème posé par la qualité du collage entre deux pièces dont l'une au moins est en matériau composite est alors essentiel tout en ayant pour souci de minimiser les coûts de préparation des surfaces à coller.

La qualité du collage est déterminée par des essais de résistance à la rupture en traction-cisaillement selon la méthode dite des cales définissant des faciès de rupture. On doit distinguer la rupture adhésive (RA), considérée comme mauvaise, où l'adhésif reste solidaire d'un support, la rupture cohésive (RC), considérée comme bonne, où la rupture intervient au sein de la couche d'adhésif et la rupture du support (RS) indépendante de l'adhésif, avec sa variante dite délamination du support (DEL), elle, excellente. On peut parler pour ces deux derniers cas de rupture de type "structural ou semi-structural". Il existe toute une série de cas intermédiaires qui sont estimés en pourcentage des surfaces concernées.

Dans le cas du composite stratifié, ledit stratifié représente la plus grande partie de toute pièce en PRV, c'est donc lui qui confère la résistance mécanique à la pièce moulée. Cela requiert l'élimination des zones pauvres ou riches en résines grâce à une répartition uniforme de la résine et du renfort et un contrôle rigoureux du rapport résine / verre. Enfin, le nombre de vides d'air ou de petits cratères de surface est éliminé avec un " ébullage " soigné qui donne cet aspect vitrifié à la pièce. La structure polyester très fermée a une influence sur les caractéristiques de surface du composite et par conséquent sur leur comportement adhésif.

Pour traiter les surfaces des pièces à coller, on utilise généralement un solvant, notamment la méthyl-éthyl-cétone, le dichlorométhane, l'acétone qui agit comme agent dégraissant pour la solubilisation partielle et/ou l'élimination grossière des agents de démoulage internes et de la phase thermoplastique présents en surface. Ce traitement n'est cependant pas suffisamment efficace pour éviter un ponçage ou une abrasion préalable des pièces à encoller avant le " dégraissage ", cette opération mécanique de ponçage ou d'abrasion étant source de poussières. Le ponçage ou l'abrasion sont par ailleurs rendus de plus en plus difficile de par les géométries de plus en plus complexes des pièces à encoller.

Il a été également proposé des traitements chimiques du substrat adaptés aux adhésifs utilisés.

Le brevet US 5792203 décrit l'utilisation de compositions à base d'amines dans un solvant fluide non volatil pour promouvoir le collage de plastiques au moyen de compositions adhésives à base de cyanoacrylates.

Le brevet US 4397707 décrit un procédé de collage de matériaux à base de polyesters au moyen d'un coating réactif isocyanate / aminorésine (urée formol ou mélamine formol).

La demanderesse a ainsi trouvé de façon surprenante, que l'utilisation à froid d'une composition liquide selon la présente invention permettait d'éviter les opérations de ponçage ou d'abrasion, ainsi que le séchage avant application de l'adhésif de type polyuréthanne.

Ainsi, la présente invention a pour objet une composition pour la préparation à froid de matériaux composites à base de résines polyester en vue d'améliorer l'état de surface desdits matériaux composites pour un collage au moyen d'adhésifs de type Polyuréthanne comprenant:

a) au moins un solvant polaire aprotique (TPA)
b) au moins un éther (TE) choisi dans la famille des éthers, des éther-esters, des éther-cétones présentant :

- un volume molaire inférieur à 200 et de préférence inférieur à 160,
- une molécule dépourvue de fonction hydroxyle, et

c) au moins un activeur (TA) comportant au moins une fonction azotée réactive de type -NH2 et/ou -NH- de volume molaire inférieur à 100.

La composition selon l'invention comprend un solvant polaire aprotique (TPA) ou un mélange de ces solvants qui sont choisis dans le groupe constitué par le Diméthylsulfoxyde (DMSO), le Diméthylformamide (DMF), la 1-méthyl-2-Pyrrolidinone (NMP), la N-Méthylmorpholine (NMm), la γ-Butyrolactone (BLo), l'Acétonitrile (AcN), le Carbonate d'éthylène et le Carbonate de propylène.

La composition selon l'invention comprend un éther ou mélange d'éthers (TE) dont le volume molaire est inférieur à 200 et de préférence inférieur à 160. Par volume molaire, on entend dans la présente demande le rapport masse molaire/densité.

A titre de TE, on citera de manière non limitative les éthers : 1,4-Dioxane (Dx), Méthyl-tert-butyl-éther (MTBE), Diéthyléther, Tert-amyl-méthyléther (TAME), 2-Méthoxy-1,3-dioxolane, 1,3,5-Trioxane, Méthyl méthoxyacétate, Méthyl-3-méthoxy-propionate (MMP), Dipropylèneglycol diméthyléther (DPGDME), Propylèneglycol méthyl éther acétate (PGMA), Tétrahydrofurane (THF), Oxyde de benzyle (OB), Dibenzyle éther(DBE), 1,3-Diméthoxybenzène, 1,4-Diméthoxybenzène, 1,2,3-Triméthoxybenzène, 2-Méthoxy-1,3-dioxolane, 1,3-Dioxolane, Anisole, 1,2-Diméthoxybenzène, 2-Méthoxy-3,4-Dihydropyrane, 2,5-Diméthoxytétrahydrofurane, Ethylèneglycoldiméthyléther, 1-tert-butoxy-2-méthoxyéthane, 1,4-Dioxane, 1,3-Dioxane et leurs mélanges.

Selon un mode préféré de la présente invention, on préférera les éthers de points éclairs supérieurs à 0°C. Le point éclair élevé de l'Oxyde de benzyle (OB) ou Dibenzyle éther (supérieur à 100°C) permet notamment l'utilisation de températures supérieures à 40°C.

La composition selon l'invention comprend un activeur ou mélange d'activeurs (TA) comportant une ou plusieurs fonctions azotées réactives de type -NH2 et/ou -NH- choisi dans la famille des aminés primaires et/ou secondaires de volume molaire inférieur à 100. A titre d'exemples de composés TA on citera notamment : pyrrole, imidazole, 3-pyrroline, pyrazote et 3-pyrroline et leurs mélanges.

On raisonne en composition ternaire Total Polaire Aprotique (TPA) /Total Ether (TE) / Total Activeur (TA), représentée sur le diagramme ternaire par les coordonnées :

$$TPA^* = [TPA /(TPA + TE + TA)].10^2$$

$$TE^* = [TE /(TPA + TE + TA)].10^2$$

$$TA^* = [TA/(TPA + TE + TA)].10^2$$

où s'applique la relation de bouclage à 100% de la composition TPA\* + TE\* + TA\* =100, toutes les grandeurs TPA, TE, TA étant exprimées en volume, les grandeurs TPA\*, TE\* et TA\* apparaissant comme des % volumes.

Les compositions de l'invention sont celles qui obéissent aux relations :

$$10\% \leq TPA^* \leq 40\%$$

$$55\% \leq TE^* \leq 85\%$$

$$1\% \leq TA^* \leq 25\%$$

Selon un mode préféré de la présente invention, le solvant ou mélange de solvants polaires aprotiques (TPA), l'éther ou mélange d'éthers (TE) et l'activeur ou mélange d'activeurs(TA) sont présents dans la composition en des quantités respectivement comprises entre 20 et 30%, 65 et 75%, et 2 et 10% en volume.

Selon une variante particulièrement préférée de l'invention, la fraction polaire aprotique (TPA) est un mélange de Diméthylsulfoxyde (DMSO) et de Diméthylformamide (DMF). Selon cette variante, le rapport volumique du mélange est avantageusement compris entre 40/60 et 60/40, et de préférence égal à 50/50.

La présente invention à également pour objet un procédé de préparation de surface à froid de supports de matériaux composites stratifiés pour leur collage consistant à traiter la surface desdits supports avec une composition selon la présente invention avant application d'un adhésif de type Polyuréthanne.

La préparation des compositions selon l'invention peut se faire par simple mélange des différents composants, à l'aide d'un agitateur ou tout autre appareil approprié.

Le procédé de préparation de surface est mis en oeuvre par dépose de la composition selon la présente invention sur la partie de la surface de l'objet devant recevoir l'adhésif. La dépose de la composition selon l'invention peut être faite par tout moyen. Parmi ces moyens, on peut citer l'immersion, l'aspersion, la pulvérisation, l'enduction à l'aide d'un pinceau, d'un chiffon ou d'une éponge etc . La dépose est effectuée à une température comprise entre 5 et 50°C et avantageusement à la température ambiante généralement comprise entre 15 et 30°C. Le temps de contact avant application de l'adhésif est compris entre 1 et 60 minutes.

La présente invention est maintenant décrite plus en détail par les exemples suivants, illustratifs de celle-ci et ne devant en aucun cas être considérés comme limitatifs de la présente invention, dont de nombreuses variantes sont aisément accessibles à l'homme de l'art.

EXEMPLES

Dans les exemples, on caractérise le faciès de rupture du support en traction/arrachement à partir d'un assemblage de deux éprouvettes en polyester chargé de fibre de verre (SMC) d'une part, et en PRV à base de résine polyester insaturé d'autre part. La méthode consiste à appliquer à froid (23°C) un cordon (10 cm x 0,8 cm ; 1 mm d'épaisseur) d'adhésif de type polyuréthanne bi-composant sur l'une des deux éprouvettes avant affichage de la seconde éprouvette, préalablement mises en contact avec une composition selon l'invention pendant au moins 1 minute à température ambiante (23°C). L'assemblage des deux éprouvettes est ensuite mis à séjourner en enceinte à 150°C pendant 2 minutes 30. Après retour à température ambiante (23°C), l'assemblage est soumis à une sollicitation en traction/arrachement jusqu'à séparation des deux éprouvettes.

L'efficacité de la liaison adhésif-support est ensuite appréciée par le type de rupture : adhésive (RA), cohésive (RC), cohésive superficielle (RCS) et délaminage du support (DEL). On peut observer la cohabitation des différents type de rupture sur un même essai de traction/arrachement. Les ruptures avec délamination du support (DEL ou DEL/RC) sont souhaitées.

L'adhésif polyuréthanne bi-composant utilisé pour illustrer l'invention est un adhésif de type semi-souple dont les rapports d'emploi sont de 100 parties en volume de résine (mélange de polyols) pour 100 parties de durcisseur (mélange d'isocyanates). Le mélange intime des deux composants est obtenu grâce à un mélangeur statique branché sur un pistolet bi-cartouches, montage couramment utilisé pour l'application de ces adhésifs.

Différentes formulations ont été testées, lesquelles ont permis de mettre en évidence les synergies existant entre les différents constituants de la composition selon l'invention.

Ci-après sont donnés les résultats obtenus en mettant en oeuvre une sélection des constituants préférés seuls ou sous forme de compositions selon la présente invention ainsi que l'action d'une solution de méthyl-éthyl-cétone (MEK) selon l'art antérieur.

Les effets analogues observés sur les éprouvettes en SMC d'une part et en PRV d'autre part non poncées (ou non abrasées) dans l'un et l'autre cas au regard des compositions testées sont les suivants :

|  | DMSO (%) | NMP (%) | Ether (%) | OB (%) | Effet |
|---|---|---|---|---|---|
| **Formule 1** | 47,5 | 47,5 | - | 5,0 | RA/RCS |
| **Formule 2** | 95,0 | - | - | 5,0 | RA/RCS |
| **Formule 3** | 30,0 | - | 70,0 | - | RA/RCS |
| **Formule 4** | 15,0 | 15,0 | 70,0 | - | RA/RCS |
| **Formule 5** | 12,5 | 12,5 | 70,0 | 5,0 | DEL/RC |
| **Formule 6** | 12,5 | 12,5 | 65,0 | 10,0 | DEL/RC |
| **Formule 7** | 25,0 | 25,0 | 25,0 | 25,0 | DEL |
| **Formule 8** | - | - | 100,0 | - | RA/RCS |
| **Formule 9** | - | - | 80,0 | 20,0 | RA/RCS |
| **Formule 10** | 25,0 | - | 70,0 | 5,0 | RC/RCS/DEL |
| **Formule 11** | - | 25,0 | 70,0 | 5,0 | RC/RCS/DEL |
|  | DMSO (%) | NMP (%) | Ether (%) | IM (%) | Effet |
| **Formule 12** | 12,5 | 12,5 | 65,0 | 5,0 | DEL/RC |
|  |  |  |  |  |  |
| **Témoin 1** | MEK (%) |  |  |  | Effet |
|  | 100,0 |  |  |  | RA/RCS |
| **Témoin 2** | - |  |  |  | RA |

- lorsqu'un solvant polaire aprotique ou un mélange de solvants polaires aprotiques est utilisé seul, on ne constate aucune amélioration par rapport aux témoins 1 et 2.
- lorsqu'un éther ou un mélange d'éthers est utilisé seul, on ne constate aucune amélioration par rapport aux témoins 1 et 2.
- lorsqu'un solvant polaire aprotique ou un mélange de solvants polaires i aprotiques est utilisé en combinaison avec un éther ou un mélange d'éthers, on ne constate aucune amélioration par rapport aux témoins 1 et 2.

- lorsqu'un solvant polaire ou un mélange de solvants polaires est utilisé en combinaison avec un activeur ou un mélange d'activeurs, on ne constate aucune amélioration par rapport aux témoins 1 et 2.
- lorsqu'un éther ou un mélange d'éthers est utilisé en combinaison avec un activeur ou un mélange d'activeurs, on ne constate aucune amélioration par rapport aux témoins 1 et 2.
- lorsqu'un solvant polaire aprotique ou un mélange de solvants polaires aprotiques, un éther ou un mélange d'éthers et un activeur ou un mélange d'activeurs sont associés dans les proportions volumiques selon l'invention, on constate une nette amélioration par rapport aux témoins 1 et 2.
- lorsque la fraction polaire aprotique d'une composition selon l'invention est constituée d'un mélange 50/50 de Diméthylsulfoxyde (DMSO) et de Diméthylformamide (DMF), on constate une légère amélioration par rapport aux compositions équivalentes n'utilisant que le DMSO ou la DMF.

On peut obtenir grâce aux présentes compositions les meilleures performances (efficacité-inflammabilité). Parmi celles-ci,on citera en particulier celles à base d'éther de benzyle ou oxyde de benzyle(OB)dont le point éclair est supérieur à 100°C.

**Revendications**

1. Composition pour la préparation à froid de matériaux composites stratifiés à base de résines polyester en vue de leur conférer sans ponçage ou abrasion préalable un état de surface propice à un collage à l'aide d'adhésifs de type Polyuréthanne comprenant:

   **(a)** au moins un solvant polaire aprotique **(TPA)**
   **(b)** au moins un éther **(TE)** choisi dans la famille des éthers, des éther-esters, des éther-cétones présentant :

   • un volume molaire inférieur à 200 et de préférence inférieur à 160,
   • une molécule dépourvue de fonction hydroxyle.

   **(c)** au moins un activeur **(TA)** comportant au moins une fonction azotée réactive de type -NH2 et/ou -NH- de volume molaire **inférieur** à 100.

2. Composition selon la revendication 1, dans laquelle le solvant polaire aprotique **(TPA)** est choisi dans le groupe constistué par: le Diméthylsulfoxyde (DMSO), le Diméthylformamide (DMF), la 1-méthyl-2-Pyrrolidinone (NMP), la N-Méthylmorpholine (NMm),la γ-Butyrolactone (BLo), l'Acétonitrile (AcN), le Carbonate d'éthylène et le Carbonate de propylène.

3. Composition selon l'une des revendications 1 à 2, dans laquelle l'éther (TE) est choisi dans le groupe constitué par le 1,4 - Dioxane (Dx), le Méthyl-tert-butyl éther (MTBE), le Diéthyléther, le Tert-amyl-méthyléther (TAME), le 2-Méthoxy-1,3-dioxolane,le 1,3,5-Trioxane, le Méthyl méthoxyacétate, le Méthyl-3-méthoxy-propionate (MMP), le Dipropylèneglycol diméthyléther (DPGDME), le Propylèneglycol méthyl éther acétate (PGMA), le Tétrahydrofurane (THF), l'Oxyde de benzyle (OB), le Dibenzyle éther(DBE), le 1,3-Diméthoxybenzène, le 1,4-Diméthoxybenzène, le 1,2,3-Triméthoxybenzène, le 2-Méthoxy-1,3-dioxolane, le 1,3-Dioxolane, l' Anisole, le 1,2-Diméthoxybenzène, le 2-Méthoxy-3,4-Dihydropyrane, le 2,5-Diméthoxytétrahydrofurane, l' Ethylèneglycoldiméthyléther, le 1-tert-butoxy-2-méthoxyéthane, le 1,4-Dioxane et le 1,3-Dioxane.

4. Composition selon l'une des revendications 1 à 3, dans laquelle l'activeur **(TA)** est choisi dans le groupe constitué par le pyrrole, l'imidazole, le pyrazole et la 3-pyrroline.

5. Composition selon une quelconque des revendications 1 à 4, où les teneurs en Total Polaire Aprotique **(TPA)**, Total Ether **(TE)** et Total Activeur (TA) décrites par les coordonnées

$$TPA^* = [TPA/(TPA + TE + TA)].10^2$$

$$TE^* = [TE /(TPA + TE + TA)].10^2$$

$$TA^* = [TA/(TPA + TE + TA)].10^2$$

sont liées dans le diagramme ternaire par les relations :

$$10\% \leq TPA^* \leq 40\%$$

$$55\% \leq TE^* \leq 85\%$$

$$1\% \leq TA^* \leq 25\%$$

où s'applique la relation de bouclage à 100% de la composition TPA* + TE* + TA* = 100, toutes les grandeurs TPA, TE, TA étant exprimées en volume, les grandeurs TPA*, TE* et TA* apparaissant comme des % volumes.

6. Composition selon l'une des revendications 1 et 2, dans laquelle le solvant polaire aprotique **(TPA)** est un mélange de Diméthylsulfoxyde (DMSO) et de Diméthylformamide (DMF) dans un rapport volumique compris entre **40/60** et **60/40,** et de préférence égal à **50/50.**

7. Composition selon l'une des revendications 1 et 3, dans laquelle, l'ether **(TE)** est un éther de point éclair supérieur à 100°C à savoir l'oxyde de benzyle (OB) ou le Dibenzyle éther.

8. Composition selon l'une des revendications 1 à 3, dans laquelle l'ether **(TE)** est choisi parmi les éthers possédant un ou plusieurs groupes méthoxy.

9. Procédé de préparation des compositions selon l'une quelconque des revendications 1 à 8, **caractérisé en ce qu'**elles sont réalisées par simple mélange des différents constituants, à l'aide d'un agitateur ou tout autre appareil approprié.

10. Procédé de préparation à froid de l'encollage de matériaux composites stratifiés, **caractérisé en ce que** l'on traite la surface desdits matériaux avec une composition selon l'une quelconque des revendications 1 à 8.

11. Procédé selon la revendication 10 **caractérisé en ce que** lesdits matériaux composites sont de type SMC (Sheet Molding Compounds), BMC (Bulk Molding Compounds), RTM (Resin Transfer Molding), AMC (Adapted Molding Compound), RIM (Resin Injection Molding).

12. Procédé selon la revendication 10, **caractérisé en ce que** lesdits matériaux composites sont des matériaux stratifiés de type PRV (Plastiques Renforcés Verre) ou FRP (Fiber Reinforced Polymers) à base de résine polyesters insaturés.

13. Procédé selon la revendication 10, **caractérisé en ce que** l'application sur le support à encoller est effectuée entre 5 et 50°C, et de préférence entre 15 et 30°C.

14. Procédé selon les revendications 10 à 13, **caractérisé en ce que** l'application de l'adhésif est réalisée moins de 60 minutes après l'application de la composition selon l'invention sans séchage préalable de la surface traitée.

15. Procédé selon les revendications 10 à 14, **caractérisé en ce que** la mise en contact de l'objet ou de la surface à préparer, l'enduction du substrat, avec la composition selon la présente invention est faite par tout moyen convenable tel que notamment l'immersion, l'aspersion, l'enduction à l'aide d'un pinceau, d'un chiffon ou d'une éponge.

16. Procédé selon les revendications 10 à 15, **caractérisé en ce que** le traitement de surface des matériaux composites est effectué préalablement à un collage ou assemblage mettant en oeuvre des adhésifs polyuréthannes.

17. Procédé selon la revendication 16, **caractérisé en ce que** l'adhésif polyuréthanne est de type mono-composant (PU1K ou HMPUR) ou bi-composant (PU2K).

**Claims**

1. Composition for the cold preparation of laminated composites based on polyester resins for the purpose of giving them, without prior grinding or abrasion, a surface finish favourable to bonding using polyurethane-type adhesives, comprising:

   (a) at least one polar aprotic solvent (TPA);
   (b) at least one ether (TE) chosen from the family of ethers, ether esters and ether ketones, having:

   · a molar volume of less than 200 and preferably less than 160,
   · a molecule containing no hydroxyl functional group;

   (c) at least one activator (TA) having at least one reactive nitrogen-containing functional group of the $NH_2$- and/or NH-type with a molar volume of less than 100.

2. Composition according to Claim 1, in which the polar aprotic solvent (TPA) is chosen from the group consisting of dimethyl sulphoxide (DMSO), dimethylformamide (DMF), 1-methyl-2-pyrrolidinone (NMP), N-methylmorpholine (NMM), ?-butyrolactone (Blo), acetonitrile (AcN), ethylene carbonate and propylene carbonate.

3. Composition according to either of Claims 1 and 2, in which the ether (TE) is chosen from the group consisting of 1,4-dioxane (Dx), methyl-tert-butyl ether (MTBE), diethyl ether, *tert*-amyl methyl ether (TAME), 2-methoxy-1,3-dioxolane, 1,3,5-trioxane, methyl methoxyacetate, methyl-3-methoxypropionate (MMP), dipropylene glycol dimethyl ether (DPGDME), propylene glycol methyl ether acetate (PGMA), tetrahydrofuran (THF), benzyl oxide (BO), dibenzyl ether (DBE), 1,3-dimethoxybenzene, 1,4-dimethoxybenzene, 1,2,3-trimethoxybenzene, 2-methoxy-1,3-dioxolane, 1,3-dioxolane, anisol, 1,2-dimethoxybenzene, 2-methoxy-3,4-dihydropyrane, 2,5-dimethoxytetrahydrofuran, ethylene glycol dimethyl ether, 1-*tert*-butoxy-2-methoxyethane, 1,4-dioxane and 1,3-dioxane.

4. Composition according to one of Claims 1 to 3, in which the activator (TA) is chosen from the group consisting of pyrrole, imidazole, pyrazole and 3-pyrroline.

5. Composition according to any one of Claims 1 to 4, in which the Total Polar Aprotic (TPA), Total Ether (TE), and Total Activator (TA) contents described by the coordinates:

$$TPA^* = [TPA/(TPA + TE + TA)] \times 10^2$$

$$TE^* = [TE/(TPA + TE + TA)] \times 10^2$$

$$TA^* = [TA/(TPA + TE + TA)) \times 10^2$$

are linked in the ternary diagram by the relationships:

$$10\% < TPA^* < 40\%$$

$$55\% \leq TE^* < 85\%$$

$$1\% \leq TA^* < 25\%$$

where the equation bringing the composition to 100%, $TPA^* + TE^* + TA^* = 100$, applies, all the quantities TPA, TE, TA being expressed by volume, and the quantities $TPA^*$, $TE^*$ and $TA^*$ appearing as vol%.

6. Composition according to either of Claims 1 and 2, in which the polar aprotic solvent (TPA) is a mixture of dimethyl sulphoxide (DMSO) and dimethylformamide (DMF) in a volume ratio of between 40/60 and 60/40, and preferably equal to 50/50.

7. Composition according to one of Claims 1 and 3, in which the ether (TE) is an ether having a flash point above 100°C, namely benzyl oxide (BO) or dibenzyl ether.

8. Composition according to one of Claims 1 to 3, in which the ether (TE) is chosen from ethers possessing one or more methoxy groups.

9. Method of preparing the compositions according to any one of Claims 1 to 8, **characterized in that** they are produced by simple mixing of the various constituents, with the aid of a stirrer or any other suitable apparatus.

10. Cold preparation method for the coating of laminated composites, **characterized in that** the surface of the said materials is treated with a composition according to any one of Claims 1 to 8.

11. Method according to Claim 10, **characterized in that** the said composites are of the SMC (Sheet Moulding Compounds), BMC (Bulk Moulding Compounds), RTM (Resin Transfer Moulding), AMC (Adapted Moulding Compound) and RIM (Resin Injection Moulding) type.

12. Method according to Claim 10, **characterized in that** the said composites are laminated materials of the GRP (Glass-Reinforced Plastic) or FRP (Fibre-Reinforced Polymer) type based on

13. Method according to Claim 10, **characterized in that** the application to the substrate to be coated is carried out between 5 and 50°C and preferably between 15 and 30°C.

14. Method according to Claims 10 to 13, **characterized in that** the application of the adhesive is carried out less than 60 minutes after the application of the composition according to the invention, without pre-drying the treated surface.

15. Method according to Claims 10 to 14, **characterized in that** the contacting of the article or of the surface to be prepared, or the coating of the substrate, with the composition according to the present invention is carried out by any suitable means, such as especially immersion, spraying or coating using a brush or a rag or a sponge.

16. Method according to Claims 10 to 15, **characterized in that** the surface of the composites is treated prior to bonding or assembling using polyurethane adhesives.

17. Method according to Claim 16, **characterized in that** the polyurethane adhesive is of one-component (PUK1 or HMPUR) or two-component (PU2K) type.

**Patentansprüche**

1. Zusammensetzung für die Herstellung auf kaltem Wege von Verbundmaterialien mit Schichtaufbau auf der Basis von Polyesterharzen, durch die die Verbundmaterialien ohne vorheriges Polieren oder Schleifen einen Oberflächenzustand erhalten, der günstig für eine Klebung mit Hilfe von Klebstoffen vom Polyurethan-Typ ist, die enthält:

   (a) mindestens ein aprotisches polares Lösemittel (TPA)
   (b) mindestens einen Ether (TE), der aus der Familie der Ether, Etherester, Etherketone ausgewählt ist,

   • die ein Molvolumen unter 200 und vorzugsweise unter 160 aufweisen,
   • deren Molekül keine Hydroxygruppe enthält,

   (c) mindestens einen Aktivator (TA), der mindestens eine reaktive stickstoffhaltige Gruppe vom Typ -NH$_2$ und/oder -NH- enthält, mit einem Molvolumen unter 100.

2. Zusammensetzung nach Anspruch 1, in der das aprotische polare Lösemittel (TPA) unter Dimethylsulfoxid (DMSO), Dimethylformamid (DMF), 1-Methyl-2-pyrrolidinon (NMP), N-Methylmorpholin (NMm), γ-Butyrolacton (BLo) Acetonitril (AcN), Ethylencarbonat und Propylencarbonat ausgewählt ist.

3. Zusammensetzung nach einem der Ansprüche 1 und 2, in der der Ether (TE) ausgewählt ist unter 1,4-Dioxan (Dx), Methyl-*tert*.-butylether (MTBE), Diethylether, *tert*.-Amylmethylether (TAME), 2-Methoxy-1,3-dioxolan, 1,3,5-Trioxan, Methylmethoxyacetat, Methyl-3-methoxypropionat (MMP), Dipropylenglykoldimethylether (DPGDME), Propylenglykolmethyletheracetat (PGMA), Tetrahydrofuran (THF), Benzyloxid (OB), Dibenzylether (DBE), 1,3-Dimethoxybenzol, 1,4-Dimethoxybenzol, 1,2,3-Trimethoxybenzol, 2-Methoxy-1,3-dioxolan, 1,3-Dioxolan, Anisol, 1,2-Dimethoxybenzol, 2-Methoxy-3,4-dihydropyran, 2,5-Dimethoxytetrahydrofuran, Ethylenglykoldimethylether, 1-*tert*.-Butoxy-2-methoxyethan, 1,4-Dioxan und 1,3-Dioxan.

4. Zusammensetzung nach einem der Ansprüche 1 bis 3, in der der Aktivator (TA) unter Pyrrol, Imidazol, Pyrazol und 3-Pyrrolin ausgewählt ist.

5. Zusammensetzung nach einem der Ansprüche 1 bis 4, worin der Gesamtgehalt an aprotischem polarem Lösemittel (TPA), der Gesamtgehalt an Ether (TE) und der Gesamtgehalt an Aktivator (TA), die durch die Gleichungen

$$TPA^* = [TPA/(TPA + TE + TA)] \cdot 10^2$$

$$TE^* = [TE/(TPA + TE + TA)] \cdot 10^2$$

$$TA^* = [TA/(TPA + TE + TA)] \cdot 10^2$$

beschrieben werden, im ternären Diagramm durch die folgenden Beziehungen

$$10 \% \leq TPA^* \leq 40 \%$$

$$55 \% \leq TE^* \leq 85\%$$

$$1 \% \leq TA^* \leq 25 \%,$$

miteinander verbunden sind, für die die Abstimmungsgleichung auf 100 % der Zusammensetzung TPA* + TE* + TA* = 100 erfüllt ist, wobei es sich bei den Größen TPA, TE, TA um Volumina und bei den Größen TPA*, TE* und TA* um Volumenprozent handelt.

6. Zusammensetzung nach einem der Ansprüche 1 und 2, in der das aprotische polare Lösemittel (TPA) ein Gemisch aus Dimethylsulfoxid (DMSO) und Dimethylformamid (DMF) ist, deren Volumenverhältnis im Bereich von 40/60 bis 60/40 liegt und vorzugsweise 50/50 beträgt.

7. Zusammensetzung nach einem der Ansrüche 1 und 3, in der der Ether ein Ether mit einem Flammpunkt von mehr als 100 °C ist, nämlich Benzyloxid (OB) oder Dibenzylether.

8. Zusammensetzung nach einem der Ansprüche 1 bis 3, in der der Ether (TE) unter den Ethern ausgewählt ist, die eine oder mehrere Methoxygruppen aufweisen.

9. Verfahren zur Herstellung der Zusammensetzungen nach einem der Ansprüche 1 bis 8, **dadurch gekennzeichnet, daß** sie durch einfaches Vermischen der verschiedenen Bestandteile mit Hilfe eines Rührers oder jedes sonstigen geeigneten Geräts hergestellt werden.

10. Verfahren zur Herstellung auf kaltem Wege der Klebung von Verbundmaterialien mit Schichtaufbau, **dadurch gekennzeichnet, daß** die Oberfläche dieser Materialien mit einer Zusammensetzung nach einem der Ansprüche 1 bis 8 behandelt wird.

11. Verfahren nach Anspruch 10, **dadurch gekennzeichnet, daß** die Verbundmaterialien Materialien vom SMC- (Sheet Molding Compounds), BMC- (Bulk Molding Compounds), RTM- (Resin Transfer Molding), AMC- (Adapted Molding Compound), RIM-Typ (Resin Injection Molding) sind.

**12.** Verfahren nach Anspruch 10, **dadurch gekennzeichnet, daß** die Verbundmaterialien Materialien mit Schichtaufbau vom Typ der glasverstärkten Kunststoffe (Plastiques Renforcés Verre, Abk.: PVR) oder vom Typ der faserverstärkten Polymere (Fiber Reinforced Polymers, Abk.: FRP) auf der Basis eines Harzes aus ungesättigten Polyestern ist.

**13.** Verfahren nach Anspruch 10, **dadurch gekennzeichnet, daß** der zu verklebende Träger bei einer Temperatur von 5 bis 50 °C und vorzugsweise 15 bis 30 °C mit der Zusammensetzung behandelt wird.

**14.** Verfahren nach den Ansprüchen 10 bis 13, **dadurch gekennzeichnet, daß** der Klebstoff weniger als 60 min nach der Behandlung mit der erfindungsgemäßen Zusammensetzung ohne vorherige Trocknung der behandelten Oberfläche aufgetragen wird.

**15.** Verfahren nach den Ansprüchen 10 bis 14, **dadurch gekennzeichnet, daß** das Inkontaktbringen des vorzubereitenden Gegenstands oder der vorzubereitenden Oberfläche, das Bestreichen des Trägers, mit der erfindungsgemäßen Zusammensetzung auf jede geeignete Weise erfolgt, wie insbesondere durch Eintauchen, Bespritzen, Bestreichen mit einem Pinsel, einem Tuch oder einem Schwamm.

**16.** Verfahren nach den Ansprüchen 10 bis 15, **dadurch gekennzeichnet, daß** die Behandlung der Oberfläche der Verbundmaterialien vor einer Klebung oder Zusammenfügung, bei der Polyurethan-Klebstoffe eingesetzt werden, durchgeführt wird.

**17.** Verfahren nach Anspruch 16, **dadurch gekennzeichnet, daß** der Polyurethan-Klebstoff ein Klebstoff vom Einkomponenten-Typ (PU1K oder HMPUR) oder Zweikomponenten-Typ (PU2K) ist.